# EUROPEAN PATENT APPLICATION

(11) **EP 2 710 907 A1**
(43) Date of publication of application: **26.03.2014**
(21) Application number: 13185322.8
(22) Date of filing: 20.09.2013
(51) Int. Cl.: A23L 1/314, A23L 1/317

(54) **Meat product**

(30) Priority: 24.09.2012 SE 1251071
(71) Applicant: Procordia Food AB, 241 81 Eslöv (SE)
(72) Inventor: Landgren, Ingrid, 244 93 Kävlinge (SE)
(74) Representative: Brann AB

(57) **Abstract**

The invention relates to a minced meat product comprising a blend of at least one kind of minced meat, at least two different whole grains and at least one protein source and a method to produce such a product.

## Description

### FIELD OF INVENTION

The invention relates to a minced meat product comprising a blend of at least one variety of minced meat, at least two different sources of whole grains and at least one protein source and a method to produce such a product.

### BACKGROUND OF INVENTION

Vegetable proteins and other vegetable components have been used to improve food products during the last years. Studies have shown that the consummation of meat on regular basis increases the risk of diabetes, overweight, heart diseases as well as different kinds of cancer. Thus there have been attempts to reduce the amount of meat in products, while maintaining taste and consistency

US 5,626,899 disclosing a vegetable protein for use as a meat extender to replace portions of lean and/or fat is made from one part of soy protein isolate hydrated in about 3.5 - 5.0 parts water at ambient temperature and then chopped. A vegetable protein and/or complex carbohydrates is/are added to the resulting mixture, and chopped again.

US 5,858,442 disclosing a protein crumble having fat-like properties is made by using a soy protein which is mixed with water and then chopped and blended. Specific amounts of isolate of soy protein or soy protein concentrates are preferred in this application.

US 6,419,977 disclosing a novel meat composition for boosting the nutritional value of meat which contains a four components dry mix system of whey protein concentrate, maltodextrin, a starch and a non-fat dry milk.

US 6,582,746 disclosing a novel meat product. The meat product contains a blend of at least one meat and, an unrefined plant protein material, being soya.

In most cases wherein the meat has been reduced and part of it replaced with something else, it has been partly replaced by soya in different forms.

### SUMMARY OF THE INVENTION

The invention relates to new improved minced meat products which in contrast to existing products, with a high meat content, fulfil the new demands of the modern consumer. These include demands such as increased satiety and ability to concentrate without compromising a high nutritional value, with a high protein content, as well as good sensory and technological properties. The invented product also give rise to increased satiety, having a low fat content and maintaining the juiciness, texture, consistence and the shapability of a meat products. By the introduction of whole grains into meat products, it is for the first time possible to place products on the market that reduce the risk of the consumer becoming ill in diabetes, different kinds of cancer, heart diseases or getting overweight. Intake of whole grain on a regular basis has been shown to reduce the risk of obtaining these diseases and disorders. The intention of replacing a part of the meat with whole grains is to obtain these positive effects on human health as well as reducing the environmental pressure which meat in itself creates due to e.g. the increased emissions of greenhouse gases and energy and water consumption.

In a first aspect, the invention relates to a minced meat product comprising a blend of at least one kind of meat, at least two different sources of whole grains and at least one other protein source, such as a vegetable protein source wherein said product fulfils at least the above defined criteria and thus solves a number of problems compared to the products that are available on the market today.

In a second aspect, the invention relates to a method of producing a minced meat product comprising the steps of blanching millet, marinating oat in a liquid with at least aroma and/or spices, mincing at least the meat, mixing at least the ingredients, and forming the minced meat product into a shape.

With the invented new product defined above, it is for the first time possible to provide a minced meat product to the market with advantageous nutritious effects on the consumer and positive effects on the environment.

### DETAILED DESCRIPTION OF THE INVENTION

### Definitions

The term "shape" is intended to mean that the meat product is formed into a shape, such as, but not limited to, the form of a hamburger, meat ball, sticks or a minced meat.

The term "w/w" is intended to mean weight/weight.

The term "meat" is intended to mean meat obtained from an animal, such as from beef, pig, lamb chicken and turkey or other suitable animals.

The term "whole grains" is intended to mean whole or cut kernels and not whole grain meal. The grains could be peeled to remove the outer layers.

### Invention

In a first aspect, the invention relates to a minced meat product comprising a blend of at least one kind of minced meat, at least two different sources of whole grains and at least one other source of protein. The minced meat may be obtained from one or several different animal species, such as beef, pig, lamb, chicken and turkey.

The whole grains are selected from the group consisting of wheat including spelt, emmer, faro, einkorn, kamut, durums, oat, barley, rye, maize (corn), rice, brown rice, African rice, wild rice , millets, fonio, canary seed, black fonio, Asian millet, teff, job's tears, sorghum, quinoa, kañiwa, amaranth, triticale, buckwheat, tartar, chia, pit seed, goosefoot, wattleseed or mixtures thereof, such as being oats and millet. The addition of whole grains improves the healthiness of the meat product and consequently the consumer, when eating such a meat product, will reduce the risk of becoming ill in diabetes, heart diseases, different kinds of cancer as well as getting overweight. At least two different kinds of grains are used or more.

Whole grains are added to the minced meat product to provide more slowly digested carbohydrates. In addition whole grains provides fibre, vitamins and minerals as well as a better water holding capacity and texture as well as optimises mastication.

Additionally, the meat product contains at least one other source of protein being selected from the groups milk protein (e.g. whey, caseins), legume protein (e.g. garbanzo beans, kidney beans, lentils, peas, lima beans, navy beans, soybeans, split peas), grain/cereal protein (e.g. barley, brown rice, buckwheat, millet, oat, quinoa, rye, wheat, wild rice), vegetable protein (e.g. artichokes, beets, broccoli, Brussels sprouts, cabbage, cauliflower, , eggplant, green pepper, kale, mushroom, mustard green, onions, potatoes, spinach, tomatoes, turnip greens, watercress, yams, zucchini), nut and seed protein (e.g. almonds, canola, cashews, filberts, hemp seeds, peanuts, pumpkin seeds, sesame seeds, sunflower seeds, rape seed, walnuts), preferably the source is pea protein. The protein source increases the protein level and the protein quality to a level close to a 100 % meat product as well as provides a viscosity and consistence to the mixture. Pea protein as an example provides a unique amino acid profile and has an advantageous taste profile which will contribute to an optimal taste experience of the product.

The minced meat product may as well comprise at least one ingredient selected from the group consisting of egg, such as egg powder or fresh eggs, onion, onion powder, tomato, tomato paste, aroma, spices, salt, oil, herbs, cheese, garlic, garlic paste, jalapeno, cheese powder, wheat flour, oat bran and water. Which ingredient to be introduced into the meat product depends on the final minced meat product. Examples of aroma, spices and herbs are basil, black pepper, black pepper extract, pepper, chili powder, chili pepper, curry, harissa, basil, thyme, coriander, nutmeg, oregano, rosemary, parsley, paprika powder, chicken flavour and beef marrow flavour.

Examples of oils are vegetable oils, such as rapeseed oil, olive oil, sunflower oil and soybean oil.

The egg may be fresh eggs or egg powder made from eggs or parts thereof.

The minced meat product described above comprising a blend of from 30 to 50% (w/w) of at least one variety of minced meat, such as 31, 32, 33, 34, 35, 36, 37, 38, 39, 40, 41, 42, 43, 44, 45, 46, 47, 48 or 49 % (w/w). Examples of amounts are 35-45%, 40-45%, 43-45% or 45%. The amount of the at least two different sources of whole grains is from 20-50% (w/w), such as 21,22, 23, 24, 25,26, 27, 28, 29, 30, 31, 32, 33, 34, 35, 36, 37, 38, 39, 40, 41, 42, 43, 44, 45, 46 47 48 or 49%. Other examples are 25-45, 30-40, 25-50, 20-45, 30-50 or 20-40%. The amount of the vegetable protein is from 2.0-8.0% (w/w), such as 2.5, 3, 3.5, 4, 4.5, 5, 5.5, 6, 6.5, 7 or 7.5%. Other examples include 2.5-5, 2,5-4 or 3-5%. One example being when pea is used as the protein source wherein at most 5 %, such as 2.0 to 5.0 % will be used in the minced meat product.

In some of the embodiments the invented minced meat product comprises at most 7% (w/w) of egg powder such as at most 5 %. The egg powder sticks the ingredients together in one piece, maintaining a distinct form or shape, such as round as a ball or shaped like a hamburger.

In another embodiment, the invention relates to a method of producing a minced meat product as described above, comprising the steps of blanching millet, marinating oat in a liquid with at least aroma and/or spices, mincing at least the meat, mixing at least the ingredients, and forming the minced meat product into a shape. Other examples of methods are disclosed in the examples below.

The following examples are intended to illustrate, but not to limit, the invention in any manner, shape, or form, either explicitly or implicitly.

### EXAMPLES

### Example 1

Meat balls: 45% beef, millet, oat grits, onion, egg powder, pea protein, spices, salt and natural aroma.

**Example 1. Meat balls**

| **Ingredients** | **%** | **Kg** |
|---|---|---|
| Beef | 40.00 | 160.00 |
| Millet | 17.00 | 68.00 |
| Oat grits (oat grits, paprika powder, beef marrow flavour) | 16.00 | 64.00 |
| Onion | 10.00 | 40.00 |
| Egg powder | 3.00 | 12.00 |
| Wheat flour | 3.00 | 12.00 |
| Pea protein | 2.50 | 10.00 |
| Salt | 0.60 | 2.40 |
| Black pepper extract | 0.40 | 1.60 |
| Onion powder | 0.30 | 1.20 |
| Beef marrow flavour | 0.25 | 1.00 |
| Oat bran | 0.80 | 3.20 |
| | | |
| Water | 6.150 | 24.60 |
| **In totalt** | 100.00 | 400.00 |

The millet is rinsed in water and blanched.

The oat is marinated in water with the spices and aromas.

The meat is placed in 0-6°C and crushed or flaked, and then grinded together with the millet. All the ingredients are then mixed, and the minced meat mixture is formed into a ball shape, deep-fried and then stored in the freezer.

### Example 2

Basil burgers 45% beef, millet, oat grains, onion, tomato, egg powder, green lenses, pea protein, tomato puree, salt, spices, herbs, jalapeno and natural aroma.

| **Ingredients** | **%** | **Kg** |
|---|---|---|
| Beef | 41.67 | 250.00 |
| Millet | 12.50 | 75.00 |
| Oat kernels (oat kernels/grains, rapeseed oil, chicken flavor and water) | 12.50 | 75.00 |
| Onion | 7.50 | 45.00 |
| Egg powder | 3.00 | 18.00 |
| Lentils/lenses | 3.33 | 20.00 |
| Pea protein | 2.50 | 15.00 |
| Tomato paste | 1.50 | 9.00 |
| Salt | 0.60 | 3.60 |
| Black pepper extract | 0.40 | 2.40 |
| Chicken flavour | 0.40 | 2.40 |
| Basil | 0.40 | 2.40 |
| Onion powder | 0.30 | 1.80 |
| Jalapeno, red | 0.30 | 1.80 |
| Chili powder | 0.10 | 0.60 |
| Water | 13.00 | 78.00 |
| **In totalt** | 100.00 | 600.00 |

The millet is rinsed in water and blanched.

The oat grains are marinated in water with the spices, aromas and rapeseed oil. The meat is placed in 0-6°C and crushed, and then grinded together with the onion. All the ingredients are then mixed, and the minced meat mixture is formed and fried. The patty/burger is then stored in a freezer.

### EXAMPLE 3.

Turkey burger 42.5% wing from a turkey, millet, oat grains, onion, tomato, egg powder, pea protein, rapeseed oil, herbs, tomato puree, salt, cheese powder, garlic, spices and natural aroma.

| **Ingredients** | **%** | **Kg** |
|---|---|---|
| Turkey meat | 41.67 | 250.00 |
| Millet | 12.50 | 75.00 |
| Oat kernels (oat kernels, chicken flavor and water) | 9.17 | 55.00 |
| Onion | 7.50 | 45.00 |
| Tomato | 5.00 | 30.00 |
| Egg powder | 3.00 | 18.00 |
| Pea protein | 2.50 | 15.00 |
| Rapeseed oil | 3.00 | 18.00 |
| Basil | 1.50 | 9.00 |
| Tomato Paste | 1.00 | 6.00 |
| Salt | 0.70 | 4.20 |
| Cheese powder | 0.50 | 3.00 |
| Garlic paste | 0.40 | 2.40 |
| Chicken flavour | 0.40 | 2.40 |
| Onion powder | 0.30 | 1.80 |
| Black pepper extract | 0.20 | 1.20 |
| Italian spices | 0.20 | 1.20 |
| Water | 10.47 | 62.80 |
| **In totalt** | 100.00 | 600.00 |

The millet is rinsed in water and blanched.

The oat grains are marinated in water with the spices and aromas.

The meat is placed in 0-6°C, and crushed, and then grinded together with the onion. All the ingredients are then mixed, and the minced meat mixture is formed and fried. The patty/burgers are then stored in a freezer.

## Claims

1. A minced meat product, comprising a blend of
a) 30-50% (w/w) of at least one minced meat,
b) 20-50% (w/w) of at least two different sources of whole grains,
and
c) 2.0-8% (w/w) of at least one vegetable protein.

2. The minced meat product according to claims 1, wherein said at least two different whole grains are selected from the group consisting of wheat including spelt, emmer, faro, einkorn, kamut, durums, oat, barley, rye, maize (corn), rice, brown rice, African rice, wild rice, millets, fonio, black fonio, Asian millet, canary seed, teff, job's tears, sorghum quinoa, kañiwa, amaranth, triticale, buckwheat, tartar, chia, pit seed, goosefoot, wattleseed or mixtures thereof.

3. The minced meat product according to claim 3, wherein said whole grains are oat and millet.

4. The minced meat product according to any of preceding claims, wherein said protein source is selected from the group consisting of milk protein, legume protein, grain/cereal protein, vegetable protein, and nut and seed protein

5. The minced meat product according to claim 4, wherein said protein source is pea.

6. The minced meat product according to claim 5, wherein said pea is present in an amount of from 2.0 to 5.0.

7. The minced meat product according to any of preceding claims wherein said product comprises at least one ingredient selected from the group consisting of egg powder, onion, onion powder, tomato, tomato paste, aroma, spices, salt, oil, herbs, cheese, garlic, garlic paste and jalapeno, cheese powder, wheat flour, oat bran and water.

8. The minced meat according to any of preceding claims, comprising a vegetable oil.

9. The minced meat according to any of preceding claims, comprising egg.

10. The minced meat product according to claim 9, comprising at most 7% (w/w) of egg powder.

11. The minced meat product according to claim 10, comprising at most 5 % (w/w) of egg powder.

12. A method of producing a minced meat product comprising the steps of
a. blanching millet with or without other ingredients,
b. marinate oat in a liquid with at least aroma and/or spices,
c. mincing meat,
d. mixing at least a-c, and
e. forming the minced meat product into a shape.
